# EUROPÄISCHE PATENTSCHRIFT

(11) **EP 3 751 167 B1**
(45) Veröffentlichungstag und Bekanntmachung des Hinweises auf die Patenterteilung: **28.12.2022**
(21) Anmeldenummer: 19179446.0
(22) Anmeldetag: 11.06.2019
(51) Int. Cl.: F16D 55/2255, F16D 65/00, F16D 65/18, F16D 65/56

(54) **SCHEIBENBREMSE MIT EINER RÜCKSTELLEINRICHTUNG FÜR EIN KRAFTFAHRZEUG UND KRAFTFAHRZEUG MIT EINER SCHEIBENBREMSE**
DISC BRAKE WITH A RESET DEVICE FOR A MOTOR VEHICLE AND MOTOR VEHICLE WITH A DISC BRAKE
FREIN À DISQUE DOTÉ D'UN DISPOSITIF DE RAPPEL POUR VÉHICULE AUTOMOBILE ET VÉHICULE AUTOMOBILE DOTÉ D'UN FREIN À DISQUE

(43) Veröffentlichungstag der Anmeldung: 16.12.2020
(73) Patentinhaber: ZF CV Systems Europe BV, 1170 Brussels (BE)
(72) Erfinder: JUNGMANN, Hans-Christian, 69517 Gorxheimertal (DE); STUMPF, Martin, 68623 Lampertheim (DE)
(74) Vertreter: Copi, Joachim

(56) Entgegenhaltungen:
- EP-A1- 3 179 126
- EP-A1- 3 244 085
- WO-A1-2015/107135
- DE-A1-102015 013 240
- DE-T2- 60 124 976
- DE-U1-202012 001 863

## Beschreibung

Die Erfindung betrifft eine Scheibenbremse mit einer Rückstelleinrichtung für ein Kraftfahrzeug, insbesondere betrifft die Erfindung eine Druckluftscheibenbremse mit einer Rückstelleinrichtung für ein Nutzfahrzeug. Scheibenbremsen weisen in der Regel eine Rückstelleinrichtung zur manuellen Rückstellen zumindest einer in der Scheibenbremse angeordneten Stellspindel auf. Die Stellspindel ist dazu eingerichtet das Lüftspiel, das heißt den Abstand zwischen Bremsbelägen und einer Bremsscheibe, einzustellen. Ein gleichbleibendes Lüftspiel gewährleistet einen gleichmäßigen Druckpunkt bei Anlegen der Bremsbeläge an die Bremsscheibe während eines Bremsvorgangs, welcher durch den Fahrer über ein Bremspedal in dem Fahrzeug ausgelöst wird. In dem Fall, das die Bremsbeläge ihr Verschleißmaß erreicht haben und ein Austausch der Bremsbeläge notwendig erscheint, wird die Stellspindel über eine in der Rückstelleinrichtung angeordnete Rückstellwelle zurückgestellt. Nach dem Rückstellvorgang befinden sich die Bremsbeläge in einer Ausgangsstellung. Als Ausgangsstellung ist die von der Bremsscheibe am weitesten entfernte axiale Stellung der Bremsbeläge ohne Verschleiß definiert. In der Ausgangsstellung kann ein einfacher Austausch der verschlissenen Bremsbeläge durch den Einsatz von neuen Bremsbelägen in einem Bremsenträger der Scheibenbremse erfolgen. Nach dem Einbau der neuen Bremsbeläge in den Bremsenträger der Scheibenbremse erfolgt über die Rückstelleinrichtung eine Zustellbewegung der Stellspindel bis ein vordefiniertes oder ein neues Lüftspiel zwischen der Bremsscheibe und den Bremsbelägen erreicht ist.

Eine Rückstelleinrichtung nach der oben genannten Ausführung geht beispielsweise aus der DE 10 2015 013 199 A1 hervor. Die Rückstelleinrichtung ist zentral in die Nachstelleinrichtung integriert. Die Sensorheinheit der Rückstelleinrichutng ist hohlzylindrisch ausgeführt, sodass die Rückstellwelle durch die Sensoreinheit geführt werden kann.

Die DE 20 2012 001 863 U1 offenbart eine Scheibenbremse mit einer Nachstelleinrichtung umfassend eine Sensoreinrichtung. Die Nachstelleinrichtung weist eine zentrale Aufnahme für ein Werkzeug zum Rückstellen der Nachstelleinrichtung auf. Die Nachstelleinrichtung ist nur für Scheibenbremsen mit einer zentralen Nachstellvorrichtung vorgesehen.

Eine weitere Nachstelleinrichtung zeigt die EP 3 179 126 A1. Wie in der DE 20 2012 001 863 U1 weist die Nachstelleinrichtung für Servicezwecke eine zentrale Werkzeugaufnahme zum Rückstellen der Nachstelleinrichtung auf. Die Rückstellwelle ist nicht koaxial in der Stellspindel angeordnet. Der Bremssattel der Scheibenbremse weist zur Aufnahme der Nachstelleinrichtung flanschseitig eine separate Öffnung auf.

Die DE 601 24 976 T2 zeigt wiederum eine Scheibenbremse für Nutzfahrzeuge, wobei eine Zuspanneinheit zwei Nachstelleinrichtung umfassend zwei Zustell - und Rückstellwellen aufweist, über die mittels eines Werkzeuges die Einstellschrauben mit den Drucktellern zu Servicezwecken zurückgestellt werden können. Die Lösung ist zeitaufwendig, da zu Servicezwecken zwei Zustell- und Rückstellwellen betätigt werden müssen. Die Nachstelleinheit ist zentral in der Stellspindel angeordnet.

Eine weitere Rückstelleinrichtung ist in der DE 10 2015 013 240 A1 offenbart. Der Abtrieb ist als dezentraler Abtrieb über ein fest verbautes Getriebe mit der Rückstellwelle drehgekoppelt. Zudem ist der dezentrale Abtrieb fest mit einer Rückenplatte verbaut, an der auch der Sensor mit der Rückstellwelle angeordnet ist. Das Getriebe bilden einzelne Zahnräder, die im verbauten Zustand miteinander in Verbindung stehen. Ein Zahnrad mit einem Aufsatz für ein Werkzeug ist auf dem dezentralen Abtrieb der Rückstelleinrichtung montiert. Die Rückstelleinrichtung ist speziell für den Einsatz einer dezentralen Zustellung und Rückstellung der Stellspindel geformt. Eine zentrale Zustellung und Rückstellung der Stellspindel über die Rückstelleinrichtung ist nicht möglich.

Ausgehend von dem Stand der Technik ist es die Aufgabe der Erfindung, eine Scheibenbremse mit einer Rückstelleinrichtung bereit zu stellen, wobei die Rückstelleinrichtung kostengünstig ist, und eine dezentrale Zustellung und eine dezentrale Rückstellung der Stellspindel ermöglicht.

Die Aufgabe wird dadurch gelöst, dass die Rückstelleinrichtung einen Adapter mit einem dezentralen Abtrieb aufweist. Die Rückstelleinrichtung kann in Fällen, bei denen eine in der Rückstelleinrichtung zentral angeordnete Rückstellwelle mit einem zentralen Werkzeugangriff von einem Werkzeug nicht erreicht werden kann, mit dem Adapter in eine dezentrale Rückstelleinrichtung umgebaut werden.

Erfindungsgemäß weißt der Adapter weiterhin einen Deckel und einen Kettentrieb auf. Der Kettentrieb verbindet den dezentralen Abtrieb mit der Rückstellwelle und überträgt eine Stellbewegung des auf dem dezentralen Abtrieb angeordneten Werkzeugs von dem dezentralen Abtrieb hin zu der Rückstellwelle. Die Rückstellwelle ist koaxial an der Stellspindel angeordnet Über die Rückstellwelle wird die Stellbewegung des Werkzeugs auf die Stellspindel übertragen, die eine Zustellbewegung oder eine Rückstellbewegung der Bremsbeläge ermöglicht.

Darüber hinaus ist der Kettentrieb erfindungsgemäß mit dem Deckel über ein oder mehrere Befestigungsmittel kraftschlüssig und formschlüssig fixiert, sodass der Kettentrieb und der Deckel eine Montageeinheit bilden. Die Montageinheit kann leicht und ohne einen hohen Zeitaufwand an die Rückstelleinrichtung montiert werden. Als Befestigungsmittel sind Schrauben oder Nieten denkbar. Besonders bevorzugt ist der Kettentrieb über eine Schraube mit dem Deckel verschraubt.

Der Adapter wird anschließend in einer weiteren Ausführung an der Rückstelleinrichtung mittels einer Steckverbindung und/oder einer Klebeverbindung an der einem Sensor der Rückstelleinrichtung gegenüberliegenden Seite eines Gehäuses, auch Rückseite genannt, der Rückstelleinrichtung angeordnet. Der Adapter kann für eine Steckverbindung beispielsweise Federklemmen aufweisen, die in für die Federklemmen ausgebildeten Öffnungen des Gehäuses der Rückstelleinrichtung verbracht werden. Es ist auch eine Klebeverbindung allein oder in Kombination mit der Steckverbindung denkbar, wobei der Adapter an der Rückseite des Gehäuses arretiert und danach verklebt wird.

Zur Anbindung des Adapters an der Rückstelleinrichtung, weist das Gehäuse der Rückstelleinrichtung in einer weiteren Ausführung an der dem Sensor abgewandten Seite des Gehäuses eine Nut zur Aufnahme dem Sensor abgewandten Seite des Gehäuses eine Nut zur Aufnahme des Adapters auf. Die Nut ist umlaufend und entspricht der Umfangsform des Adapters.

Das Gehäuse weist in einer bevorzugten Weiterbildung an der dem Sensor abgewandten Seite des Gehäuses zumindest einen Vorsprung zur Arretierung des Kettentriebs auf. Der Kettentrieb umfasst eine Grundplatte mit einer Bohrung zur Aufnahme des zentralen Abtriebs der Rückstellwelle und den auf der der Bohrung zur Aufnahme des zentralen Abtriebs gegenüberliegenden Seite der Grundplatte angeordneten dezentralen Abtrieb. Der dezentrale Abtrieb und die Grundplatte sind vorteilhaft einstückig als Gussformteil ausgebildet. Mittig zwischen der Bohrung für den zentralen Abtrieb und dem auf der Grundplatte angeordneten dezentralen Abtrieb sind zumindest zwei weitere Bohrungen zur Aufnahme des zumindest einen Vorsprungs und zur Aufnahme des Befestigungsmittels, dass den Kettentrieb mit dem Deckel fixiert, vorhanden. Zudem ist umlaufend um die Grundplatte eine Kette zur Übertragung der Drehbewegung des dezentralen Abtriebs auf die Rückstellwelle angeordnet.

In einer weiteren Ausgestaltung ist der dezentrale Abtrieb ein als Sechskant ausgebildetes Gussformteil zur Aufnahme eines Werkzeugs ausgebildet. Der dezentrale Abtrieb weist keine spezielle Form aus, sodass für eine Zustellbewegung oder eine Rückstellbewegung als Werkzeug ein Sechskantschlüssel ausreichend ist. Der dezentrale Abtrieb ist als Material nicht auf ein Gusseisen beschränkt, sondern kann auch aus anderen verwindungssteifen Materialien, wie hochfesten Kunststoffen, bestehen.

Der Deckel des Adapters ist in einer weiteren Ausführung ein Kunststoffteil oder ein Metallteil. Weiterhin weist der Deckel axial der Rückstelleinrichtung eine Öffnung zur Aufnahme des dezentralen Abtriebs auf. Die Öffnung umschließt den dezentralen Abtrieb. Darüber hinaus weist die Öffnung zur Aufnahme des Werkzeugs einen größeren Durchmesser auf als der als Sechskant ausgebildete Teil des dezentralen Abtriebs.

In einer letzten Ausführung umfasst ein Kraftfahrzeug eine Scheibenbremse mit einer Rückstelleinrichtung, wobei die Rückstelleinrichtung einen Adapter mit einem dezentralen Abtrieb aufweist.

Nachfolgend werden ausgewählte Ausführungsbeispiele der Erfindung anhand der beigefügten Figuren erläutert.

Es zeigt:
Fig. 1 eine Frontalansicht einer Scheibenbremse, mit einer Rückstelleinrichtung,
Fig. 2 eine Scheibenbremse nach Fig. 1 aus der Draufsicht,
Fig. 3 eine Rückstelleinrichtung im Detail.

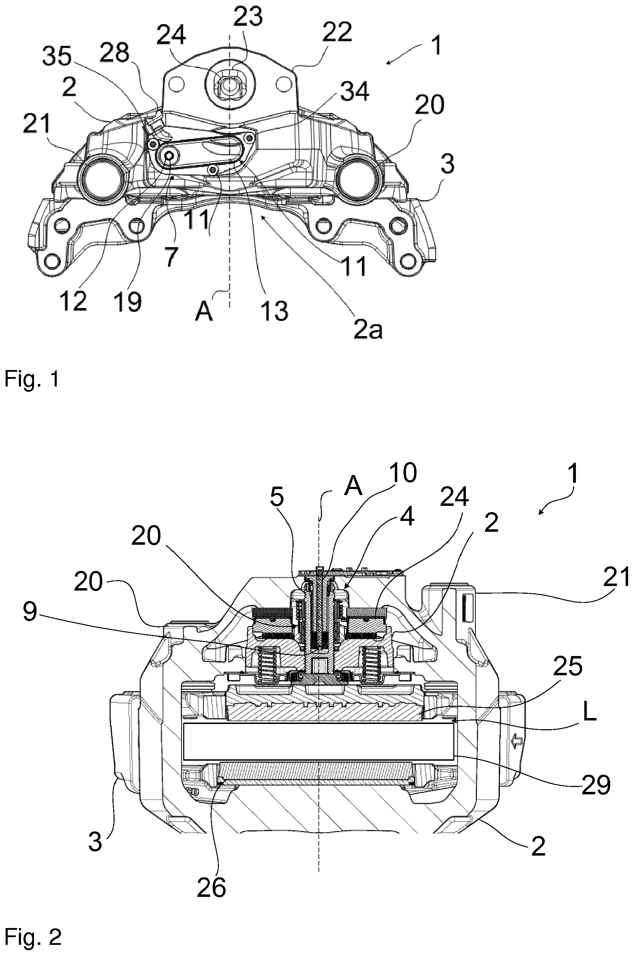

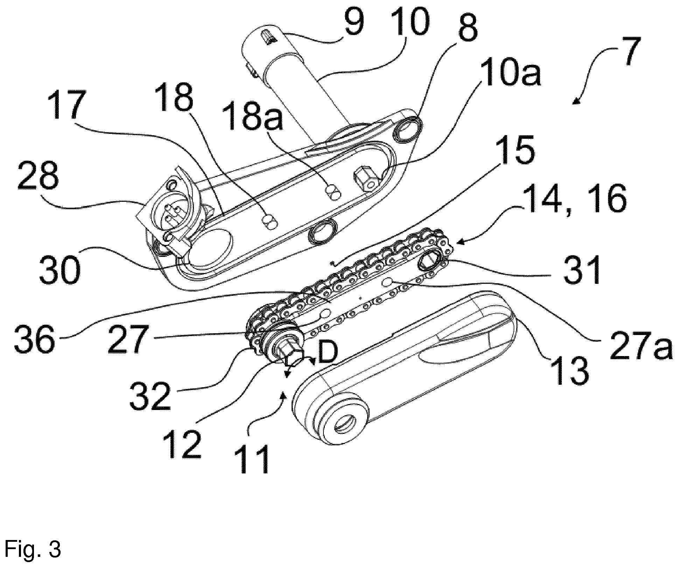

Fig. 1 zeigt eine Scheibenbremse 1 in der Frontalansicht von der Zuspannseite. Die Scheibenbremse 1 weist einen Bremssattel 2 auf, der gleitend über zwei Führungsbolzen 20, 21 auf einem Bremsenträger 3 gelagert ist. Der Bremssattel 2 weist zum anflanschen eines nicht gezeigten Bremszylinders eine Flanschfläche 22 mit einer Öffnung 23 zum Betätigen eines Drehhebels 24 auf. Unterhalb der Flanschfläche 22 des Bremssattels 2, also radial in Richtung des Bremsenträgers 3, ist eine Rückstelleinrichtung 7 an der Außenseite 2a des Bremssattels 2 angeordnet. Die Rückstelleinrichtung 7 ist dafür ausgelegt ein manuelles Zurückstellen einer zentral in der Scheibenbremse 1 angeordneten Stellspindel 5 (s. Fig. 2) zu ermöglichen, wenn ein oder zwei Bremsbeläge 25, 26 (s. Fig. 2) ihr Verschleißmaß erreicht haben und getauscht werden müssen. Die Rückstelleinrichutng 7 ist nicht untrennbar mit dem Bremssattel 2 verbunden. 3 Schrauben 33, 34, 35, die die Rückstelleinrichtung 7 mit dem Bremssattels 2 verbinden, ermöglichen einen Austausch der Rückstelleinrichtung 7 oder eine Wartung der Rückstelleinrichtung 7. Deutlich sichtbar ist an der Rückstelleinrichtung 7 ein, gegenüber der Scheibenbremsenachse A, dezentral angeordneter Abtrieb 12. Der Abtrieb 12 ist ein Teil des Adapters 11 der Rückstelleinrichtung 7. Gegen Umwelteinflüsse und mechanischen Einwirkungen weist der Adapter zusätzlich einen Deckel 13, mit einer Öffnung 19 auf und wobei der Abtrieb 12 zur mechanischen Betätigung durch die Öffnung 19 des Deckels 13 geführt ist. Der Deckel 13 ist wiederum an einem Gehäuse 8 (siehe Fig. 3) der Rückstelleinrichtung 7 fixiert. Über einen Sensoranschluss 28 wird ein in Figur 3 gezeigter Sensor 9 mit Strom versorgt und die Messsignale werden an eine nicht gezeigte Steuereinheit weiter geleitet.

Eine Draufsicht der Scheibenbremse 1 nach Fig. 1, ist in Figur 2 gezeigt. Die Figur 2 ist eine geschnitten Darstellung der Scheibenbremse 1, sodass in dem Bremssattel 2 der Scheibenbremse 1 eine Zuspanneinheit 4 sichtbar ist. Die Zuspanneinheit 4 weist wiederum eine Stellspindel 5 zum Einstellen eines Lüftspiels L zwischen einer Bremsscheibe 29 und einem Bremsbelag 25, 26 auf. Im Falle eines Bremsbelagwechsels müssen die Bremsbeläge 25, 26 axial in ihre Ausgangsposition zurückgestellt werden. Als Ausgangsposition ist der größtmögliche Abstand zwischen einem der Bremsbeläge 25, 26 und der Bremsscheibe 29 zu verstehen. Für die Rückstellbewegung der Stellspindel 5 in die Ausgangsposition ist zentral in der Stellspindel 5 eine Rückstellwelle 10 mit dem Sensor 9 zum Erfassen der axialen Stellbewegung der Stellspindel 5 angeordnet. Die Rückstellwelle 10 ist zum Zu-und Zurückstellen der Stellspindel 5 über einen in Fig. 3 gezeigten Kettentrieb 14 mit dem Abtrieb 12 gekoppelt.

In Fig. 3 ist die Rückstelleinrichtung 7 als Explosionszeichnung im Detail gezeigt. Neben den bereits in Fig. 1 und Fig. 2 beschriebenen Bauteilen der Rückstelleinrichtung 7, ist in Fig. 3 der Kettentrieb 14 deutlich erkennbar. Der Kettentrieb 14 ist als Bauteil des Adapters 11 zwischen dem Deckel 13 und dem Gehäuse 8 angeordnet. Konkret ist der Kettentrieb 14 axial als Steckverbindung 16 auf zwei Vorsprüngen 18, 18a des Gehäuses 8 aufgesteckt, wobei die Vorsprünge 18, 18a in zwei Bohrungen 27, 27a des Kettentriebs 14 greifen. Zur besseren Arretierung weist das Gehäuse 8 zusätzlich eine Sacklochbohrung 30 zur Aufnahme des dem Abtrieb 12 gegenüberliegenden Bereichs des Kettentriebs 14 auf. Eine in dem Gehäuse 8 eingebrachte Nut 17 dient der Aufnahme und der Fixierung des Deckels 13. Der Kettentrieb ist zudem mittels einer als Schraube ausgebildeten Befestigungsmittels 15 mit dem Deckel 13 kraftschlüssig fixiert. Darüber hinaus ist der Abtrieb 12 drehbar gelagert und weist die Form eines Sechskantzylinders auf. Zusätzlich ist eine als Sechskant ausgebildete Bohrung 31, nachfolgend Sechskantbohrung 31 genannt, an der dem Abtrieb 12 gegenüberliegenden Seite des Kettentriebs 14 angeordnet. Die Sechskantbohrung 31 dient zur Aufnahme eines Endbereichs 10a der Rückstellwelle 10. Der Endbereich 10a ist als Sechskantmutter 10a ausgebildet. Für eine Zu- oder Rückstellung der Stellspindel 5 wird ein in dem Abtrieb 12 gesteckter und nicht gezeigter Sechskantschlüssel im Uhrzeigersinn oder entgegen dem Uhrzeigersinn mittels zumindest einer Drehbewegung D gedreht. Die Drehbewegung D wird von dem Abtrieb 12 mittels einer Kette 32 des Kettentriebs 14 auf die Sechskantmutter 10a der in der Stellspindel 5 zentral angeordneten Rückstellwelle 10 übertragen. Je nach Drehrichtung D wird anschließend die Stellspindel 5 in ihre Ausgangsstellung herausgedreht oder in eine gewünschte Position in Richtung der Bremsscheibe 29 (in Fig. 1 gezeigt) hereingedreht.

### Bezugszeichenliste als Teil der Beschreibung

- 1: Scheibenbremse
- 2: Bremssattel
- 2a: Außenseite des Bremssattels 2
- 3: Bremsenträger
- 4: Zuspanneinheit
- 5: Stellspindel
- 7: Rückstelleinrichtung
- 8: Gehäuse
- 9: Sensor
- 10: Rückstellwelle
- 10a: Endbereich der Rückstellwelle 10; Sechskantmutter
- 11: Adapter
- 12: dezentraler Abtrieb
- 13: Deckel
- 14: Kettentrieb
- 15: Befestigungsmittel
- 16: Steckverbindung
- 17: Nut
- 18-18a: Vorsprünge
- 19: Öffnung des Deckels 13
- 20-21: Führungsbolzen
- 22: Flanschfläche des Bremssattels 2
- 23: Öffnung der Flanschfläche 22
- 24: Drehhebel
- 25-26: Bremsbeläge
- 27, 27a: Bohrungen des Kettentriebs 14
- 28: Sensoranschluss
- 29: Bremsscheibe
- 30: Sacklochbohrung
- 31: Sechskantbohrung
- 32: Kette
- 33-35: Schrauben
- A: Scheibenbremsenachse
- D: Drehbewegung
- L: Lüftspiel

## Patentansprüche

1. Scheibenbremse (1) für Kraftfahrzeuge umfassend, mindestens zwei Bremsbeläge (25, 26), eine Zuspanneinheit (4) aufweisend eine axial in Richtung der Bremsbeläge (25, 26) zentral in der Scheibenbremse (1) angeordnete Stellspindel (5), sowie eine
Rückstelleinrichtung (7) zum Verstellen der Stellspindel (5) nach Erreichen eines Verschleißmaßes der Bremsbeläge (25, 26) durch eine Rückstellbewegung der Stellspindel (5) in eine Ausgangsposition,
wobei die Rückstelleinrichtung (7) ein Gehäuse (8), einen Sensor (9) zum Erfassen axialer Stellbewegung der Stellspindel (5) und eine Rückstellwelle (10) aufweist, wobei die Rückstellwelle (10) mit dem Sensor (9) zentral in der Stellspindel (5) angeordnet ist, und wobei die Rückstelleinrichtung (7) einen Adapter (11) mit einem gegenüber der Scheibenbremse (1) dezentral angeordneten Abtrieb (12) aufweist, wobei der Adapter (11) einen Deckel aufweist,
die Scheibenbremse (1) **dadurch gekennzeichnet, dass**
der Adapter (11) einen Kettentrieb (14) aufweist, wobei der Kettentrieb (14) dazu ausgebildet ist eine Stellbewegung von dem dezentralen Abtrieb (12) auf die Rückstellwelle (10) zu übertragen, und wobei der Kettentrieb (14) mit dem Deckel (13) über ein Befestigungsmittel (15) kraftschlüssig und formschlüssig fixiert ist.

2. Scheibenbremse (1) nach einem der vorangegangenen Ansprüche, **dadurch gekennzeichnet, dass** der Adapter (11) an der Rückstelleinrichtung (7) mittels einer Steckverbindung (16) und/oder einer Klebeverbindung angeordnet ist.

3. Scheibenbremse (1) nach einem der vorangegangenen Ansprüche, **dadurch gekennzeichnet, dass** das Gehäuse (8) an der dem Sensor (9) abgewandten Seite des Gehäuses (8) eine Nut (17) zur Aufnahme des Adapters (11) aufweist.

4. Scheibenbremse (1) nach Anspruch 1 , **dadurch gekennzeichnet, dass** das
Gehäuse (8) an der dem Sensor (9) abgewandten Seite des Gehäuses (8) zumindest einen Vorsprung (18, 18a) zur Arretierung des Kettentriebs (14) aufweist.

5. Scheibenbremse (1) nach Anspruch 1, **dadurch gekennzeichnet, dass** der dezentrale Abtrieb (12) ein als Sechskant ausgebildetes Gussformteil zur Aufnahme eines Werkzeugs ist.

6. Scheibenbremse (1) nach Anspruch 1, **dadurch gekennzeichnet, dass** der Deckel (13) ein Kunststoffteil oder ein Metallteil ist und eine Öffnung (19) zur Durchführung des dezentralen Abtriebs (12) aufweist.

7. Kraftfahrzeug aufweisend eine Scheibenbremse (1), **dadurch gekennzeichnet, dass** die Scheibenbremse (1) nach einem der vorangegangenen Ansprüche ausgebildet ist.

## Claims

1. Disc brake (1) for motor vehicles, comprising at least two brake pads (25, 26), an application unit (4) having a setting spindle (5) arranged centrally in the disc brake (1) axially in the direction of the brake pads (25, 26), and a resetting device (7) for adjustment of the setting spindle (5) after reaching a degree of wear of the brake pads (25, 26) by a resetting movement of the setting spindle (5) into a starting position, the resetting device (7) having a housing (8), a sensor (9) for sensing an axial actuating movement of the setting spindle (5), and a resetting shaft (10), the resetting shaft (10) being arranged with the sensor (9) centrally in the setting spindle (5), and the resetting device (7) having an adapter (11) with an output (12) arranged decentrally in relation to the disc brake (1), the adapter (11) having a cover, the disc brake (1) **characterized in that** the adapter (11) has a chain drive (14), the chain drive (14) being designed to transmit an actuating movement from the decentral output (12) to the resetting shaft (10), and the chain drive (14) being fixed with the cover (13) by way of a fastening means (15) in a force-fitting and form-fitting manner.

2. Disc brake (1) according to one of the preceding claims, **characterized in that** the adapter (11) is arranged on the resetting device (7) by means of a plug connection (16) and/or an adhesive connection.

3. Disc brake (1) according to either of the preceding claims, **characterized in that** the housing (8) has, on the side of the housing (8) opposed to the sensor (9), a groove (17) for receiving the adapter (11) .

4. Disc brake (1) according to Claim 1, **characterized in that** the housing (8) has, on the side of the housing (8) opposed to the sensor (9), at least one projection (18, 18a) for retaining the chain drive (14).

5. Disc brake (1) according to Claim 1, **characterized in that** the decentral output (12) is a casting, which is formed as a hexagon, for receiving a tool.

6. Disc brake (1) according to Claim 1, **characterized in that** the cover (13) is a plastic part or a metal part and has an opening (19) for leading through the decentral output (12).

7. Motor vehicle having a disc brake (1), **characterized in that** the disc brake (1) is realized according to one of the preceding claims.

## Revendications

1. Frein à disque (1) pour véhicules automobiles, comprenant au moins deux garnitures de frein (25, 26), une unité de serrage (4) présentant une tige de réglage (5) agencée axialement en direction des garnitures de frein (25, 26) au centre du frein à disque (1), ainsi qu'un dispositif de rappel (7) pour le déplacement de la broche de réglage (5) après avoir atteint une mesure d'usure des garnitures de frein (25, 26) par un mouvement de rappel de la broche de réglage (5) dans une position initiale, le dispositif de rappel (7) présentant un boîtier (8), un capteur (9) pour détecter un mouvement de réglage axial de la broche de réglage (5) et un arbre de rappel (10), l'arbre de rappel (10) étant agencé avec le capteur (9) au centre de la broche de réglage (5),
et le dispositif de rappel (7) présentant un adaptateur (11) avec une sortie (12) agencée de manière décentralisée par rapport au frein à disque (1), l'adaptateur (11) présentant un couvercle, le frein à disque (1) **caractérisé en ce que** l'adaptateur (11) présente un entraînement par chaîne (14), l'entraînement par chaîne (14) étant configuré pour transmettre un mouvement de réglage de la sortie décentralisée (12) à l'arbre de rappel (10), et la transmission par chaîne (14) étant fixée au couvercle (13) par l'intermédiaire d'un moyen de fixation (15) par force et par complémentarité de forme.

2. Frein à disque (1) selon l'une quelconque des revendications précédentes, **caractérisé en ce que** l'adaptateur (11) est agencé sur le dispositif de rappel (7) au moyen d'une liaison par enfichage (16) et/ou d'une liaison par collage.

3. Frein à disque (1) selon l'une quelconque des revendications précédentes, **caractérisé en ce que** le boîtier (8) présente, sur le côté du boîtier (8) détourné du capteur (9), une rainure (17) pour recevoir l'adaptateur (11).

4. Frein à disque (1) selon la revendication 1, **caractérisé en ce que** le boîtier (8) présente, sur le côté du boîtier (8) détourné du capteur (9), au moins une saillie (18, 18a) pour bloquer l'entraînement par chaîne (14) .

5. Frein à disque (1) selon la revendication 1, **caractérisé en ce que** la sortie décentralisée (12) est une pièce coulée configurée sous forme d'hexagone pour recevoir un outil.

6. Frein à disque (1) selon la revendication 1, **caractérisé en ce que** le couvercle (13) est une pièce en matière plastique ou une pièce métallique et présente une ouverture (19) pour le passage de la sortie décentralisée (12) .

7. Véhicule automobile présentant un frein à disque (1), **caractérisé en ce que** le frein à disque (1) est configuré selon l'une quelconque des revendications précédentes.
